# EUROPEAN PATENT APPLICATION

(11) **EP 4 802 894 A1**
(43) Date of publication of application: **09.09.2026**
(21) Application number: 26162134.6
(22) Date of filing: 03.03.2026
(51) Int. Cl.: A01N 43/10, A01P 13/00

(54) **HERBICIDAL COMBINATIONS, METHODS, AND APPLICATIONS THEREOF**

(30) Priority: 04.03.2025 ES 202530182
(71) Applicant: UPL Mauritius Limited, Port Louis (MU)
(72) Inventor: LAPAGE, Florent, 4102 Ougree (BE); PAVON, Ricardo Hugo, 41728 Sevilla (ES); MERAYO, Humberto, 41728 Sevilla (ES); JELDEN, Thomas, Shray Hill, TF6 6JR (GB)
(74) Representative: Secerna LLP

(57) **Abstract**

The present disclosure relates to agrochemical combinations. More particularly, the present disclosure relates to a herbicidal combination comprising at least one chloroacetamide herbicide and at least a diphenyl ether herbicides. The disclosure further relates to a herbicidal composition comprising dimethenamid or dimethenamid-P, at least a diphenyl ether herbicides and at least an agriculturally acceptable excipient.

## Description

### FIELD OF THE DISCLOSURE:

The present disclosure relates to agrochemical combinations and compositions. More particularly, the present disclosure relates to a herbicidal combination/composition comprising at least one chloroacetamide herbicide and at least a diphenyl ether herbicide.

### BACKGROUND OF THE DISCLOSURE:

The use of herbicides is critical in modern agriculture to prevent weeds and other undesirable plants from hindering crop development, health, and productivity. For many years, herbicides have been the primary method of weed control. However, developing effective herbicides presents significant challenges. Herbicides with broad activity against many weed species often exhibit toxicity to crops, limiting their utility. Moreover, even the most effective herbicides can have undesirable economic or environmental consequences. An ideal herbicide would be both selective, targeting a wide range of weeds while sparing crops, and environmentally benign, degrading rapidly after application. The rise of herbicide resistance in weeds further complicates weed management, resulting in yield losses and increased expenses. Consequently, there is a pressing need for novel solutions to control weeds that have evolved resistance or tolerance to current herbicides.

Dimethenamid-P is the (S)-enantiomer of 2-chloro-N-(2,4-dimethylthiophen-3-yl)-N-[(2S)-1-methoxypropan-2-yl]acetamide (represented as formula I). It is the active enantiomer of dimethenamid, a herbicide applied to the soil to control various broad-leaved weeds and grasses. It has a role as a herbicide, an agrochemical and an antimitotic. It is an enantiomer of a (R)-dimethenamid.

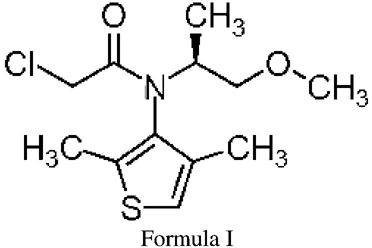

### OBJECTIVES OF THE DISCLOSURE:

It is a primary objective of the present disclosure to provide a herbicidal combination for controlling weeds.

Another objective of the present disclosure is to provide a herbicidal composition for controlling weeds.

Another objective of the present disclosure is to provide a method for controlling weeds.

Yet another objective of the present disclosure is to provide a method for efficient control, suppression and eradication of weeds by applying an effective amount of a herbicidal composition or combination comprising at least one chloroacetamide herbicide and at least a diphenyl ether herbicide.

It is yet another objective of the present disclosure to provide method for controlling weeds by applying an effective amount of a herbicidal combination comprising a chloroacetamide herbicide and at least a diphenyl ether herbicide.

### SUMMARY OF THE DISCLOSURE:

An aspect of the present disclosure provides a herbicidal combination comprising at least one chloroacetamide herbicide and at least one diphenyl ether herbicide.

Another aspect of the present disclosure provides a herbicidal composition comprising at least one chloroacetamide herbicide, at least a diphenyl ether herbicide and at least an agriculturally acceptable excipient.

Another aspect of the present disclosure provides a method for controlling weeds by applying an effective amount of the herbicidal combination or composition comprising at least a chloroacetamide herbicide and at least a diphenyl ether herbicide.

Additional features and advantages of the present disclosure will be apparent from the detailed description that follows, which illustrates by way of example, the most preferred features of the present disclosure which are not to be construed as limiting the scope of the disclosure described herein.

### DETAILED DESCRIPTION OF THE DISCLOSURE:

The present disclosure now will be described hereinafter with reference to the accompanying examples, in which embodiments of the disclosure are shown. This description is not intended to be a detailed catalogue of all the different ways in which the disclosure may be implemented, or all the features that may be added to the instant disclosure. Thus, the disclosure contemplates that in some embodiments of the disclosure, any feature or combination of features set forth herein can be excluded or omitted. In addition, numerous variations and additions to the various embodiments suggested herein will be apparent to those skilled in the art in light of the instant disclosure, which do not depart from the instant disclosure. Hence, the following descriptions are intended to illustrate some particular embodiments of the disclosure, and not to exhaustively specify all permutations, combinations and variations thereof.

Unless otherwise defined, all technical and scientific terms used herein have the same meaning as commonly understood by one of ordinary skill in the art to which this disclosure belongs. Although methods and materials similar or equivalent to those described herein can be used in the practice or testing of the disclosure, suitable methods and materials are described herein.

The following description is provided to assist in a comprehensive understanding of exemplary embodiments of the disclosure. It includes various specific details to assist in that understanding but these are to be regarded as merely exemplary. The disclosure in its broader aspects is not limited to the specific details and representative methods. An illustrative example is described in this section in connection with the embodiments and methods provided.

It is to be noted that, as used in the specification, the singular forms "a", "an", and "the" include plural referents unless the context clearly dictates otherwise. Thus, for example, reference to a composition containing "a compound" includes a mixture of two or more compounds. It should also be noted that the term "or" is generally employed in its sense including "and/or" unless the content clearly dictates otherwise. The terms "preferred" and "preferably" refer to embodiments of the disclosure that may afford certain benefits, under certain circumstances.

As used herein, the terms "comprising", "having", "including", "containing" and "involving" are to be construed as open-ended terms (i.e., meaning "including, but not limited to") unless otherwise noted. In any aspect or embodiment described hereinbelow, the phrase comprising may be replaced by the phrases "consisting of" or "consisting essentially of" or "consisting substantially of". In these aspects or embodiment, the combination or composition described "includes" or "comprises" or "consists of" or "consists essentially of" or "consists substantially of" the specific components recited therein, to the exclusion of other herbicides or fungicides or insecticides or plant growth promoting agents or adjuvants, or excipients not specifically recited therein.

The use of any and all examples, or exemplary language (e.g., "such as"), is intended merely to better illustrate the disclosure and does not pose a limitation on the scope of the disclosure unless otherwise claimed. No language in the specification should be construed as indicating any non-claimed element as essential to the practice of the disclosure as used herein.

The expression of various quantities in terms of "%" or "% w/w" means the mass concentration of the particular ingredient in the composition/combination unless otherwise specified.

As used herein, the terms "kg a.i./ha" or "kg/ha" as used herein denote the concentration of the respective active ingredient in "kilograms" applied "per hectare" of the crop field.

As used herein, the terms "g a.i./ha" or "g/ha" as used herein denote the concentration of the respective active ingredient in "grams" applied "per hectare" of the crop field.

As used herein, the terms "about" or "approximately" are inclusive of the stated value and means within an acceptable range of deviation for the particular value as determined by one of ordinary skilled in the art, considering the measurement in question and the error associated with measurement of the particular quantity (i.e., the limitations of the measurement system). For example, "about" can mean within one or more standard deviations, or within ± 10% or ± 5% of the stated value. Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and independently combinable. It is understood that where a parameter range is provided, all integers within that range, and tenths thereof, are also provided. For example, "0.1-80%" includes 0.1%, 0.2%, 0.3%, etc. up to 80%.

As used herein, the term "agrochemical" used herein is understood to denote an agricultural chemical such as pesticides, fungicides, insecticides, acaricides, herbicides, nematicides, plant growth regulators and can be used interchangeably.

As used herein, the term "agriculturally acceptable salt" means a salt which is acceptable for use in agrochemical or horticultural use. The salts referred to herein are agriculturally acceptable salts.

As used herein, the term "herbicide" means an active ingredient that kills, controls or otherwise adversely modifies the growth of unwanted plants. As used herein, a "herbicidally effective amount" is an amount of active ingredient that causes a "herbicidal effect" i.e., an adversely modifying effect and includes deviations from natural development, killing, regulation, desiccation, retardation, and methods known to a person skilled in the art.

As used herein the term "plant" or "crop" refers to whole plants, plant organs (e.g., leaves, stems, twigs, roots, trunks, limbs, shoots, fruits etc.), plant cells, and plant seeds. This term also encompasses plant crops such as fruits. The term "plant" may further include the propagation material thereof, which may include all the generative parts of the plant such as seeds and vegetative plant material such as cuttings and tubers, which can be used for the multiplication of the plant. This includes seeds, tubers, spores, corms, bulbs, rhizomes, sprouts basal shoots, stolon, and buds and other parts of plants, including seedlings and young plants, which are to be transplanted after germination or after emergence from soil.

As used herein, the term "plant propagation material" is understood to denote generative parts of a plant, such as seeds, vegetative material such as cuttings or tubers, roots, fruits, tubers, bulbs, rhizomes and parts of plants, germinated plants and young plants which are to be transplanted after germination or after emergence from the soil. These young plants may be protected before transplantation by a total or partial treatment by immersion.

As used herein, the term "seed" embraces seeds and plant propagules of all kinds including but not limited to true seeds, seed pieces, suckers, corms, bulbs, fruit, tubers, grains, cuttings, cut shoots and the like. In a preferred embodiment a seed is a true seed.

As used herein, the term "increased yield" of an agricultural plant means that the yield of a product of the respective plant is increased by a measurable amount over the yield of the same product of the plant produced under the same conditions, but without the application of the combinations and compositions described herein. According to the present disclosure, it is preferred that the crop yield be increased by at least 0.5 %, preferably at least 2%, more preferably at least 5%, upon application of the combinations and compositions described herein.

The term "weed" as used herein refers to the plant whose growth is considered undesirable in a particular situation i.e., growth of a plant at a wrong place and includes pesticide resistant plants. In the broadest sense, the term "weed" refers to plants which grow in locations in which they are not desired. In other words, a "weed" is a plant in which in the context of a crop is undesirable due to competition for water, nutrients, sunlight, soil, etc. The term may also refer to crop plants which are undesirable at a location.

As used herein, the terms "undesirable vegetation", "harmful plants", "unwanted plants", "weeds" and "weed species", as used herein, are synonyms.

Typically, the combinations/compositions of the present disclosure are applied to the targeted weed or to their locus or to the crop/plant. The term "locus" as used herein shall denote the vicinity of a desired crop in which weed control, typically selective weed control is desired. The locus includes the vicinity of desired crop plants wherein the weed infestation has either emerged or is yet to emerge.

The term crop shall include a multitude of desired crop plants or an individual crop plant growing at a locus. The said locus could be a weed, an area adjacent to the weed, soil adapted to support growth of the weed, a root of the weed and/or foliage of the weed.

As used herein, the term "post-emergence" refers to the application of a herbicidal combination or a composition after emergence of a plant from the soil.

As used herein, the term "pre-emergence" refers to the time point before seedlings emerge from the ground. When any herbicide is applied at pre-emergence stage, it prevents establishment of the germinated weed seedlings.

As used herein, the terms "formulation" and "composition" may be used interchangeably and refer to a mixture of two or more compounds, elements, molecules, etc. In some aspects, the terms formulation and composition may be used to refer to a mixture of one or more ingredients with a carrier or other excipients.

As used herein, the term "phytotoxicity" refers to any adverse effect or reaction on plant growth, physiology, or metabolism caused by any chemical substance, fertilizer, herbicide, heavy metal, etc.

As used herein, the terms "excipient" or "additive" mean inactive substance that forms a part of the composition. The terms "excipient" or "additive" mean essentially the same thing and can be used interchangeably.

In an embodiment, the present disclosure provides a herbicidal combination comprising:
a. at least a chloroacetamide herbicide; and
b. at least a diphenyl ether herbicide.

In an embodiment, chloroacetamide herbicide is selected from acetochlor, alachlor, allidochlor, amidochlor, butachlor, butenachlor, CDEA, delachlor, diethatyl, dimethachlor, dimethenamid, dimethenamid-P, ethachlor, ethaprochlor, metazachlor, metolachlor, S-metolachlor, pethoxamid, pretilachlor, propachlor, propisochlor, prynachlor, terbuchlor, thenylchlor, or xylachlor.

In a preferred embodiment, chloroacetamide herbicide is selected from dimethenamid or dimethenamid-P.

In an embodiment, the present disclosure provides a herbicidal combination comprising:
a. dimethenamid or dimethenamid-P; and
b. at least a diphenyl ether herbicides.

In an embodiment, diphenyl ether herbicides is selected from acifluorfen, aclonifen, bifenox, chlomethoxyfen, chlornitrofen, ethoxyfen, etnipromid, fluorodifen, fluoroglycofen, fluoronitrofen, fomesafen, fucaomi, furyloxyfen, halosafen, lactofen, nitrofen, nitrofluorfen and oxyfluorfen.

In a preferred embodiment, diphenyl ether herbicide is aclonifen.

In an embodiment, the chloroacetamide and the diphenyl ether herbicides are combined in a ratio in the range from 1:100 to 100:1. In an embodiment, the chloroacetamide and the diphenyl ether herbicides are combined in a ratio in the range from 1:80 to 80:1. In an embodiment, the chloroacetamide and the diphenyl ether herbicides are combined in a ratio in the range from 1:60 to 60:1. In an embodiment, the chloroacetamide and the diphenyl ether herbicides are combined in a ratio in the range from 1:40 to 40:1. In an embodiment, the chloroacetamide and the diphenyl ether herbicides are combined in a ratio in the range from 1:20 to 20:1. In an embodiment, the chloroacetamide and the diphenyl ether herbicides are combined in a ratio in the range from 1:15 to 15:1. In an embodiment, the chloroacetamide and the diphenyl ether herbicides are combined in a ratio in the range from 1:10 to 10:1. In an embodiment, the chloroacetamide and the diphenyl ether herbicides are combined in a ratio in the range from 1:5 to 5:1. In an embodiment, the chloroacetamide and the diphenyl ether herbicides are combined in a ratio in the range from 1:1 to 4:1. In an embodiment, the chloroacetamide and the diphenyl ether herbicides are combined in a ratio of 1:1. In a preferred embodiment, chloroacetamide and the diphenyl ether herbicides are combined in a ratio of 1.28:1, 1.33:1, 2:1, 5:1, 6:1, 7:1, 8:1, 9:1, 10:1, 11:1 or 12:1.

In an embodiment of the present disclosure weeds are treated by applying concurrently or subsequently or sequentially the herbicidal combination comprising dimethenamid or dimethenamid-P and at least a diphenyl ether herbicide.

The present disclosure further provides a herbicidal composition comprising at least two herbicides.

While the subsequent embodiments focus on herbicidal compositions, the features and characteristics of herbicides, weeds, crop, mode of action, are as described by any of the embodiments above. For the sake of brevity, and avoiding repetition, each of those embodiments are not being reiterated here again. However, each of the said embodiments completely fall within the purview of the herbicidal composition, described herein.

In an embodiment, the present disclosure provides a herbicidal composition comprising:
a. at least one chloroacetamide herbicide;
b. at least a diphenyl ether herbicide; and
c. at least an agriculturally acceptable excipient.

Another embodiment of the present disclosure provides a herbicidal composition comprising:
a. dimethenamid or dimethenamid-P;
b. at least a diphenyl ether herbicide; and
c. at least an agriculturally acceptable excipient.

Another embodiment of the present disclosure provides a herbicidal composition comprising:
a. dimethenamid or dimethenamid-P;
b. aclonifen; and
c. at least an agriculturally acceptable excipient.

According to an embodiment, the herbicidal composition comprises dimethenamid or dimethenamid-P in an amount from about 1% w/w to about 95% w/w of total weight of the composition. In an embodiment, the herbicidal composition comprises dimethenamid or dimethenamid-P in an amount from about 30% w/w to about 90% w/w of total weight of the composition. In an embodiment, the herbicidal composition comprises dimethenamid or dimethenamid-P in an amount from about 50% w/w to about 85% w/w of total weight of the composition.

According to an embodiment, the herbicidal composition comprises diphenyl ether herbicides in an amount from about 1% w/w to about 95% w/w of total weight of the composition. In an embodiment, the herbicidal composition comprises diphenyl ether herbicides in an amount from about 1% w/w to about 90 % w/w of total weight of the composition. In an embodiment, the herbicidal composition comprises diphenyl ether herbicides in an amount from about 10% w/w to about 80 % w/w of total weight of the composition. In an embodiment, the herbicidal composition comprises diphenyl ether herbicides in an amount from about 20 % w/w to about 70 % w/w of total weight of the composition. In an embodiment, the herbicidal composition comprises diphenyl ether herbicides in an amount from about 30 % w/w to about 60 % w/w of total weight of the composition. In an embodiment, the herbicidal composition comprises diphenyl ether herbicides in an amount from about 40 % w/w to about 50 % w/w of total weight of the composition.

According to an embodiment, herbicidal composition comprises agriculturally acceptable excipient in an amount from about 0.01% w/w to about 90% w/w of total weight of the composition. According to an embodiment, herbicidal composition comprises the agriculturally acceptable excipient in an amount from about 1% w/w to about 80% w/w of total weight of the composition. According to an embodiment, herbicidal composition comprises the agriculturally acceptable excipient in an amount from about 10% w/w to about 70% w/w of total weight of the composition. According to an embodiment, herbicidal composition comprises the agriculturally acceptable excipient in an amount from about 20% w/w to about 60% w/w of total weight of the composition. According to an embodiment, herbicidal composition comprises the agriculturally acceptable excipient in an amount from about 30% w/w to about 50% w/w of total weight of the composition. According to an embodiment, herbicidal composition comprises the agriculturally acceptable excipient in an amount from about 40% w/w to about 45% w/w of total weight of the composition.

In some embodiments, the herbicidal composition comprises agriculturally acceptable excipient selected from a group comprising solvent, diluent, carrier, surfactant, dispersing agent, wetting agent, antifoam agent, stabilizing agent, anti-freezing agent, biocide, viscosity modifiers, pH modifier and combinations thereof.

In some embodiments, the agriculturally acceptable solvent is selected from aromatic compounds, such as xylene, toluene or alkylnaphthalenes, chlorinated aromatic compounds or chlorinated aliphatic hydrocarbons, such as chlorobenzenes, chloroethylenes or methylene chloride, aliphatic hydrocarbons, such as cyclohexane or paraffins, for example mineral oil fractions, mineral and vegetable oils, alcohols, such as butanol or glycol, and also ethers and esters thereof, ketones, such as acetone, methyl ethyl ketone, methyl isobutyl ketone or cyclohexanone, strongly polar solvents, such as dimethylformamide and dimethylsulphoxide, and also water.

In some embodiments, the agriculturally acceptable carrier is selected from a solid carrier or a liquid carrier.

In some embodiments, the agriculturally acceptable liquid carrier is selected from water, toluene, xylene, petroleum ether, vegetable oils, acetone, methyl ethyl ketone, cyclohexanone, acid anhydrides, acetonitrile, acetophenone, amyl acetate, 2-butanone, butylene carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethylformamide, dimethyl sulfoxide, 1,4-dioxane, dipropylene glycol, dipropylene glycol methyl ether, dipropylene glycol dibenzoate, diproxitol, alkylpyrrolidone, ethyl acetate, 2-ethylhexanol, ethylene carbonate, 1,1,1-trichloroethane, 2-heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, n-hexane, n-octylamine, octadecanoic acid, octylamine acetate, oleic acid, oleylamine, o-xylene, phenol, polyethylene glycol, propionic acid, propyl lactate, propylene carbonate, propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and alcohols of higher molecular weight, such as amyl alcohol, tetrahydrofurfuryl alcohol, hexanol, octanol, ethylene glycol, propylene glycol, glycerol, N-methyl-2-pyrrolidone and combinations thereof.

In some embodiments, the agriculturally acceptable solid carrier is selected from talc, titanium dioxide, pyrophyllite clay, silica, attapulgite clay, kieselguhr, limestone, calcium carbonate, bentonite, calcium montmorillonite, cottonseed husks, wheat flour, soybean flour, pumice, wood flour, ground walnut shells, lignin and combinations thereof.

In some embodiments, the agriculturally acceptable surfactants may be selected from nonionic surfactants such as polyoxyethylene alkyl ethers, polyoxyethylene alkyl (mono- or di-) phenyl ethers, polyoxyethylene (mono-, di- or tri-) styrylphenyl ethers, polyoxyylene polyoxypropylene block copolymers, polyoxyethylene fatty acid (mono- or di-)esters, sorbitan fatty acid esters, polyoxyethylene sorbitan fatty acid esters, castor oil ethylene oxide adducts, acetylene glycol, acetylene alcohol, ethylene oxide adducts of acetylene glycol, ethylene oxide adducts of acetylene alcohol, alkyl glycosides, etc.; anionic surfactants, such as alkyl sulfates, alkylbenzene sulfonates, alpha olefin sulfonate, lignin sulfonates, alkyl sulfosuccinates, naphthalene sulfonates, alkylnaphthalene sulfonates, salts of formalin condensate of naphthalenesulfonic acid, salts of formalin condensate of alkylnaphthalene sulfonic acid, polyoxyethylene alkyl ether sulfuric acid or phosphoric acid ester salts, polyoxyethylene (mono- or di-) alkylphenyl ether sulfate or phosphate ester salts, polyoxyethylene (mono-, di- or tri)styrylphenyl ether sulfuric or phosphoric ester salts, polycarboxylates (for example, polyacrylic acid salts, polymaleic acid salts, a copolymer of maleic acid and olefin, etc.), polystyrene sulfonate, etc.; cationic surfactants, such as alkyl amine salts, alkyl quaternary ammonium salts, etc.; amphoteric surfactants of amino acid type, betaine type, etc.; silicone surfactants, fluorine surfactants, and combinations thereof.

In one embodiment, the herbicidal composition for controlling weeds in plants/crops may contain ionic and nonionic dispersing agents to enable disintegration of granules in water with ease, such as salts of polystyrenesulphonic acids, salts of polyvinylsulphonic acids, salts of naphthalenesulphonic acid/formaldehyde condensates, salts of condensates of naphthalenesulphonic acid, phenolsulphonic acid and formaldehyde, and salts of lignosulphonic acid, polyethylene oxide/polypropylene oxide block copolymers, polyethylene glycol ethers of linear alcohols, reaction combinations of fatty acids with ethylene oxide and/or propylene oxide, furthermore polyvinyl alcohol, polyvinylpyrrolidone, acrylic copolymers, copolymers of polyvinyl alcohol and polyvinylpyrrolidone and copolymers of (meth)acrylic acid and (meth)acrylic esters, furthermore alkyl ethoxylates and alkylarylethoxylates. The preferred dispersing agents include sodium naphthalene sulfonateformaldehyde condensate, polyethyleneglycol mono- [2,4,6-tris (1-phenylethyl] phenyl ether or a combination thereof.

In one embodiment, the herbicidal composition for controlling weeds in plants/crops may contain stabilizers. Such stabilizers may include carboxylic acids, such as citric acid and butenedioic acid or inorganic components such as sodium hydroxide, potassium hydroxide, and sodium dihydrogen phosphate dihydrate which may also act as a pH modifier.

In some embodiments, the herbicidal composition for controlling weeds in plants/crops of the present disclosure comprise at least one antifoaming agent which are usually employed for this purpose in agrochemical compositions. In some embodiments, the preferred antifoaming agents are selected from silicone oil, modified polydimethylsiloxane, magnesium stearate or a suitable combination thereof.

In some embodiments, the herbicidal composition for controlling weeds in plants/crops of the present disclosure comprise at least one pH modifier selected from organic and inorganic components that are usually employed in agrochemical compositions to modify the pH. In a non-limiting embodiment, the pH modifier may be selected from potassium carbonate, potassium hydroxide, sodium hydroxide and sodium dihydrogen phosphate. However, the choice of a pH modifier is not particularly limiting.

In an embodiment, the biocide is 1,2-Benzisothiazolin-3-one.

In some embodiments, the herbicidal composition for controlling weeds in crops is in a solid dosage form or liquid dosage form.

In some embodiments, the herbicidal composition for controlling weeds in plants is in a dosage form selected from a group comprising aerosols, capsule suspensions, cold-fogging concentrates, warm-fogging concentrates, encapsulated granules, fine granules, flowable concentrates for the treatment of seed, ready-to-use solutions, dustable powders, emulsifiable concentrates, oil-in-water emulsions, water-in oil emulsions, macrogranules, microgranules, oil-dispersible powders, oil-miscible flowable concentrates, oil-miscible liquids, foams, pastes, pesticide-coated seed, suspension concentrates, suspension emulsion concentrates, soluble concentrates, suspensions, wettable powders, soluble powders, dusts and granules, water-soluble granules or tablets, water-soluble powders for the treatment of seed, wettable powders, natural combinations and synthetic substances impregnated with active compound, and also microencapsulations in polymeric substances and in coating materials for seed, and also ULV cold fogging and warm-fogging formulations.

In an embodiment, the herbicidal composition can be impregnated or coated onto dry bulk granular fertilizer carriers for soil applications.

In an embodiment, the herbicidal combination and composition comprises a herbicide safener selected from mefenpyr, mefenpyr-diethyl, isoxadifen-ethyl, cyprosulfamide, fenclorim, cloquintocet-mexyl, benoxacor, or fluxofenim.

In an embodiment, safener may be applied to the seed before sowing.

In an embodiment, safeners are applied at a rate of 10 g/ha to about 2500 g/ha.

The present disclosure further relates to a method of controlling weeds, said method comprising contacting or applying at the locus of crops, an effective amount of an herbicidal combination or herbicidal composition, as described above.

According to an embodiment, the present disclosure provides a method for controlling weeds.

In another embodiment, the present disclosure provides a method for controlling herbicide-resistant weeds.

In another embodiment, the present disclosure provides a method for controlling herbicide-tolerant weeds.

In another embodiment, the present disclosure provides a method for controlling herbicide-resistant and/or herbicide-tolerant weeds.

In another embodiment, the present disclosure provides a method for controlling weeds in fallow fields.

In another embodiment, the present disclosure provides a method for controlling herbicide-resistant and/or herbicide-tolerant weeds in fallow fields.

In another embodiment, the present disclosure provides a method for controlling herbicide-resistant and/or herbicide-tolerant weeds by application of a combination of chloroacetamide herbicide and at least a diphenyl ether herbicide.

In another embodiment, the present disclosure relates to a method for controlling weeds comprising application of effective amount of herbicidal combination or composition comprising dimethenamid or dimethenamid-P and at least a diphenyl ether herbicide.

In an embodiment, diphenyl ether herbicides is selected from acifluorfen, aclonifen, bifenox, chlomethoxyfen, chlornitrofen, ethoxyfen, etnipromid, fluorodifen, fluoroglycofen, fluoronitrofen, fomesafen, fucaomi, furyloxyfen, halosafen, lactofen, nitrofen, nitrofluorfen and oxyfluorfen.

In a preferred embodiment, diphenyl ether herbicides is aclonifen.

In another embodiment, the present disclosure provides a method for controlling weeds by application of an effective amount of the herbicidal combination or the herbicidal composition to a plant, or a plant propagation material, or a locus thereof.

In an embodiment, the present disclosure provides a method for controlling weeds, wherein the weeds are treated by applying concurrently or subsequently or sequentially a herbicidal combination or composition comprising dimethenamid or dimethenamid-P and at least a diphenyl ether herbicide.

In an embodiment, the present disclosure provides a method for controlling weeds, wherein the weeds are treated by applying concurrently or subsequently or sequentially a herbicidal combination or composition comprising dimethenamid or dimethenamid-P, at least a diphenyl ether herbicide and an additional agrochemical thereof.

In an embodiment, the additional agrochemical comprises at least one pesticide selected from the group comprising acaricides, algicides, avicides/bird repellents, bactericides, fungicides, herbicide safeners, herbicides, insect attractants, insect chemosterilants, insect repellents, insecticides, mammal repellents, molluscicides, nematicides, nitrification inhibitors, plant activators, plant growth regulators, rodenticides, synergists, virucides, and combinations thereof.

In an embodiment, the herbicide safener is selected from mefenpyr, isoxadifen-ethyl, cyprosulfamide, fenclorim, cloquintocet-mexyl, benoxacor, or fluxofenim.

In an embodiment, the present disclosure provides a method for controlling weeds, wherein the herbicidal combination comprises dimethenamid or dimethenamid-P, at least a diphenyl ether herbicide and an additional herbicide thereof.

In an embodiment, the additional herbicide is selected from the group comprising aliphatic acid herbicides, amide herbicides, aromatic acid herbicides, benzofuran herbicides, benzonitrile herbicides, benzophenone herbicides, benzothiadiazinone herbicides, benzyl ether herbicides, botanical herbicides, chloroacetamide herbicides, cyclohexanedione oxime herbicides, dinitroaniline herbicides, dinitrophenol herbicides, phenyl ether herbicides, diphenyl heterocycle herbicides, dithiochloroacetamide herbicides, fumigant herbicides, halogenated alkanoic acid herbicides, imidazolinone herbicides, inorganic herbicides, isoxazole herbicides, isoxazolidinone herbicides, isoxazoline herbicides, N-phenyl heterocycle herbicides, N-phenylimide herbicides, N-phenyloxadiazolone herbicides, N-phenyltriazolinone herbicides, organochlorine herbicides, organophosphorous herbicides, oxirane herbicides, phenol herbicides, phenoxy herbicides, phenylcarboxylic acid herbicides, phenylthiourea herbicides, pyrazole herbicides, pyridazine herbicides, pyridazinone herbicides, pyridine herbicides, pyrimidinediamine herbicides, pyrimidinyloxybenzylamine herbicides, quaternary ammonium herbicides, quinone herbicides, alpha-thioacetamide herbicides, thiochloroacetamide herbicides, thiocarbonate herbicides, triazine herbicides, triazinone herbicides, triazole herbicides, triazolone herbicides, triazolopyrimidine herbicides, triketone herbicides, uracil herbicides, urea herbicides, unclassified herbicide, and combinations thereof.

In an embodiment, the additional herbicide is further selected from the group comprising phosphinic acid herbicides, sulfonylaminocarbonyltriazolinone herbicides, anilide herbicides, acetamide herbicides, aryloxyphenoxypropionic herbicides, benzoylpyrazole herbicides, glycine derivative herbicides, aryloxyphenoxypropionic herbicides, N-phenylimide herbicides, imidazolinone herbicides, N-phenyltriazolinone herbicides, alkylazine herbicides, phenoxyacetic herbicides, pyridyloxycarboxylic acid herbicides, benzoic acid herbicides, triketone herbicides, chlorotriazine herbicides, quaternary ammonium herbicides, phenylurea herbicides, phenylpyrazoline herbicides, and combinations thereof.

In a preferred embodiment, the additional herbicide is selected from the group comprising glufosinate, glufosinate-P, flucarbazone, mesotrione, propanil, napropamide, napropamide-M, quizalofop, quizalofop-P, haloxyfop, haloxyfop-P, topramezone, saflufenacil, amicarbazone, pyroxasulfone, metolachlor, S-metolachlor, pendimethalin, clomazone, glyphosate, paraquat, clethodim, triclopyr, and combinations thereof.

In another preferred embodiment, the additional herbicide is selected from the group comprising diflufenican, propisochlor, flumioxazin, imazethapyr, sulfentrazone, indaziflam, 2,4-dichlorophenoxyacetic acid (2,4-D), fluroxypyr, halauxifen, dicamba, tembotrione, atrazine, diquat, florpyrauxifen, terbuthylazine, diuron, pinoxaden, epyrifenacil, tiafenacil, and combinations thereof.

In another preferred embodiment, the additional herbicide is flumioxazin applied at a rate in the range from about 10 to 500 g ai/ha.

In an embodiment, the present disclosure provides a herbicidal combination comprising, dimethenamid or dimethenamid-P, at least a diphenyl ether herbicide and flumioxazin.

In an embodiment, the present disclosure provides a herbicidal combination comprising dimethenamid or dimethenamid-P, aclonifen and flumioxazin.

In another embodiment, the present disclosure provides a method for controlling weeds by application of a herbicidal composition comprising dimethenamid or dimethenamid-P, at least a diphenyl ether herbicide and at least one agriculturally acceptable excipient thereof.

In another embodiment, the present disclosure provides a method for controlling herbicide-resistant and/or herbicide-tolerant weeds by application of a herbicidal composition comprising dimethenamid or dimethenamid-P, at least a diphenyl ether herbicide and at least one agriculturally acceptable excipient thereof.

According to an embodiment, the present disclosure provides a method for controlling weeds, wherein the weeds are treated by applying concurrently or subsequently or sequentially a herbicidal composition comprising dimethenamid or dimethenamid-P, at least a diphenyl ether herbicides and at least one agriculturally acceptable excipient thereof.

In another embodiment, the present disclosure provides a method for controlling weeds by application of an effective amount of the herbicidal composition to a plant, or a plant propagation material, or a locus thereof.

According to an embodiment, the present disclosure relates to a herbicidal composition comprising dimethenamid or dimethenamid-P, at least a diphenyl ether herbicides and at least one agriculturally acceptable excipient thereof; wherein the herbicidal composition is in a form of a solid or a liquid formulation.

In an embodiment chloroacetamide herbicide is applied in an amount in the range from about 100 to about 1000 g ai/ha. In another embodiment chloroacetamide herbicide is applied in an amount in the range from about 100 to about 900 g ai/ha. In another embodiment chloroacetamide herbicide is applied in an amount in the range from about 100 to about 800 g ai/ha. In another embodiment chloroacetamide herbicide is applied in an amount of about 360 g ai/ha. In another embodiment chloroacetamide herbicide is applied in an amount of about 432 g ai/ha. In another embodiment chloroacetamide herbicide is applied in an amount of about 518 g ai/ha. In another embodiment chloroacetamide herbicide is applied in an amount of about 576 g ai/ha. In another embodiment chloroacetamide herbicide is applied in an amount of about 691 g ai/ha. In another embodiment chloroacetamide herbicide is applied in an amount of about 720 g ai/ha. In another embodiment chloroacetamide herbicide is applied in an amount of about 864 g ai/ha.

In an embodiment, the diphenyl ether herbicides are applied in an amount in the range from about 100 to about 1000 g ai/ha. In another embodiment, the diphenyl ether herbicides are applied in an amount from about 200 to about 800 g ai/ha. In another embodiment, the diphenyl ether herbicides are applied in an amount from about 300 to about 600 g ai/ha. In another embodiment, the diphenyl ether herbicides are applied in an amount of about 432 g ai/ha. In another embodiment, the diphenyl ether herbicides are applied in an amount of about 450 g ai/ha. In another embodiment, the diphenyl ether herbicides are applied in an amount of about 675 g ai/ha. In another embodiment, the diphenyl ether herbicides are applied in an amount of about 900 g ai/ha.

According to an embodiment, the herbicidal composition comprises an additional agrochemical in an amount from about 1% w/w to about 80% w/w of total weight of the composition. In another embodiment, the herbicidal composition comprises an additional herbicide in an amount from about 1% w/w to about 80% w/w of total weight of the composition.

In another embodiment, the herbicidal composition comprising dimethenamid or dimethenamid-P comprises an additional herbicide in an amount from about 1% w/w to about 50% w/w of total weight of the composition.

In an embodiment, the present disclosure provides a method for controlling weeds, preferably broadleaf weeds.

In an embodiment, the present disclosure provides a method for controlling weeds, preferably grass weeds.

In a preferred embodiment, the weeds may be selected from the group of Poaceae weeds comprising *Echinochloa crusgalli, Setaria viridis, Setaria faberi, Setaria glauca, Setaria geniculata, Digitaria ciliaris, Digitaria sanguinalis, Digitaria horizontalis, Digitaria insularis, Eleusine indica, Poa annua, Alospecurus aequalis, Alopecurus myosuroides, Avena fatua, Sorghum halepense, Sorghum vulgare, Agropyron repens, Lolium multiflorum, Lolium perenne, Lolium rigidum, Bromus secalinus, Bromus tectorum, Hordeum jubatum, Aegilops cylindrica, Phalaris arundinacea, Phalaris minor, Apera spicaventi, Panicum dichotomiflorum, Panicum texanum, Panicum maximum, Brachiaria platyphylla, Brachiaria ruziziensis, Brachiaria plantaginea, Brachiaria decumbens, Brachiaria brizantha, Brachiaria humidicola, Cenchrus echinatus, Cenchrus pauciflorus, Eriochloa villosa, Pennisetum setosum, Chloris gayana, Eragrostis pilosa, Rhynchelitrum repens, Dactyloctenium aegyptium, Ischaemum rugosum, Oryza sativa, Paspalum notatum, Paspalum maritimum, Pennisetum clandestinum, Pennisetum setosum* or *Rottboellia cochinchinensis,* and combinations thereof.

In a preferred embodiment, the weeds may be selected from the group comprising *Avena sp., Avena sativa, Avena strigosa, Ageratum conyzoides, Bidens pilosa, Bidens subalternans, Brachiaria brizantha* (currently known as *Urochloa brizantha*), *Brachiaria decumbens* (currently known as *Urochloa decumbens), Brachiaria extensa* (currently known as *Urochloa platyphylla*), *Brachiaria plantaginea* (currently known as *Urochloa plantaginea*), *Cenchrus echinatus, Chloris gayana, Chloris sp., Conyza sp., Commelina benghalensis, Commelina elegans, Cynodon dactylon, Digitaria insularis, Digitaria horizontalis, Digitaria sanguinalis, Digitaria Nuda, Echinochloa crusgalli, Echinochloa sp., Eleusine ssp., Eragrostis ciliaris, Eragrostis Pilosa, Leptochloa filiformis, Melinis minutiflora, Melinis repens, Murdannia nudiflora, Panicum fasciculatum, Panicum purpurascens, Panicum maximum, Paspalum dilatatum, Paspalum virgatum, Pennisetum purpureum, Pennisetum setosum, Poa annua, Raddia stolonifera, Rhynchelytrum repens, Rottboellia exaltata, Spermacoce verticillata, Spermacoce latifolia, Spermacoce spinosa, Setaria spp., Sorghum halepense, Sorghum sudanense, Sporobolus indicus, Tridax procumbens,* and unwanted plants growing in a particular crop field such as volunteer *Glycine max,* volunteer *Zea mays,* volunteer cotton, volunteer wheat, other volunteer crops, and combinations thereof.

In an embodiment, the herbicidal combination/composition comprising dimethenamid or dimethenamid-P are applied to a plant, or a plant propagation material, or a locus thereof, in an effective amount. The selection of the effective amount depends on the density of weed infestation, weather patterns, crop health, etc.

According to an embodiment, the present disclosure provides a method for controlling weeds in crops comprising rice, wheat, barley, rye, oat, sorghum, cotton, soybean, peanut, buckwheat, beet, rapeseed, sunflower, durum wheat, fall wheat, field corn, winter barley, cotton, fall barley, fallow, spring wheat, triticale, winter wheat, sugar cane, tobacco, etc.; vegetables; solanaceous vegetables such as eggplant, tomato, pimento, popper, potato, etc., cucurbit vegetables such as cucumber, pumpkin, zucchini, water melon, melon, squash, etc., cruciferous vegetables such as radish, white turnip, horseradish, kohlrabi, Chinese cabbage, cabbage, leaf mustard, broccoli, cauliflower, etc., asteraceous vegetables such as burdock, crown daisy, artichoke, lettuce, etc., liliaceous vegetables such as green onion, onion, garlic, and asparagus, ammiaceous vegetables such as carrot, parsley, celery, parsnip, etc., chenopodiaceous vegetables such as spinach, Swiss chard, etc., lamiaceous vegetables such as Perilla frutescens, mint, basil, etc. strawberry, sweet potato, Dioscorea japonica, colocasia, etc., flowers, foliage plants, turf grasses, fruits: pome fruits such apple, pear, quince, etc. stone fleshy fruits such as peach, plum, nectarine, Prunus mume, cherry fruit, apricot, prune, etc., citrus fruits such as orange, lemon, rime, grapefruit, etc., nuts such as chestnuts, walnuts, hazelnuts, almond, pistachio, cashew nuts, macadamia nuts, etc. berries such as blueberry, cranberry, blackberry, raspberry, etc., grape, kaki fruit, olive, plum, banana, coffee, date palm, coconuts, etc., trees otter than fruit trees; tea, mulberry, flowering plant, trees such as ash, birch, dogwood, Eucalyptus, Ginkgo biloba, lilac, maple, Quercus, poplar, Judas tree, liquidambar formosana, plane tree, zelkova. Japanese arborvitae, fir wood, hemlock, juniper, Pinus, Picea, and Taxus cuspidate, and combinations thereof.

In a preferred embodiment, the present disclosure provides a method for controlling weeds in crops comprising row crops comprising sunflower, potato, canola, dry bean, field pea, flax, safflower, buckwheat, cotton, maize, soybeans, sugar beets, and combinations thereof.

In a preferred embodiment, the present disclosure provides a method for controlling weeds in crops comprising sugarcane, soybean, wheat, maize, corn, cotton, rice, peanut, wheat, barley, and combinations thereof.

According to an embodiment of the present disclosure, the herbicidal combination/composition comprising dimethenamid or dimethenamid-P is usually applied to the unwanted plants/weeds by spraying on the leaves. Here, the application can be carried out using, for example, water as carrier by customary spraying techniques.
In an embodiment, the application of the herbicidal combination/composition may be done before, during and/or after, preferably before and/or after, the sowing of the crops.

In an embodiment, the herbicidal combination or composition can be impregnated or coated onto dry bulk granular fertilizer carriers for soil applications.

In an embodiment, the application of the herbicidal combination/composition may be done on fallow field.

In a preferred embodiment, the application of the herbicidal combination/composition may be done to control the growth of weeds at the pre-emergence stage or the post-emergence stage.

In a preferred embodiment, the application of the herbicidal combination/composition may be done to control the growth of weeds close to the sowing stage of the crop.

In an embodiment, the application of the herbicidal combination/composition may be done as a burndown application.

In an embodiment, the application of the herbicidal combination/composition may be done during fallow period or at the weeds post-emergence stage.

According to an embodiment of the present disclosure, the herbicidal combination/composition may be applied pre-or post-emergence of weeds, or together with the plant, or plant propagation material, or locus of a plant thereof. It is also possible to apply the herbicidal combination/composition comprising dimethenamid or dimethenamid-P to a plant, or a plant propagation material, or a locus thereof or pre-treating a crop plant with the herbicidal combination/composition.

According to an embodiment, the present disclosure provides use of a herbicidal combination/composition, for controlling weeds.

In an embodiment, the present disclosure provides use of a herbicidal combination/composition comprising dimethenamid or dimethenamid-P and at least a diphenyl ether herbicide for controlling herbicide-resistant and/or herbicide-tolerant weeds.

In an embodiment, the present disclosure provides use of a herbicidal combination/composition, for improving yield of the desired crop.

In another embodiment, the herbicidal combination/composition of the present disclosure may be applied in combination with agriculturally active components such as fertilizers, macronutrients, micronutrients, biologicals, biostimulants, plant extracts, synergists, and combinations thereof.

In an embodiment, the macronutrients or a micronutrient is selected from the group comprising nitrogen, phosphorus, potassium, calcium, sulfur, magnesium, iron, zinc, copper, boron, manganese, chlorine, molybdenum, nickel, and combinations thereof.

In another embodiment, the additional herbicide/agrochemical may be admixed with an adjuvant or a bio-stimulant or an agrochemical or a fertilizer compound such that said components may be tank mixed before spraying.

According to an embodiment, the herbicidal combination/composition is applied from a pre-dosage device, a knapsack sprayer, a spray tank, a spray plane, or an irrigation system, or a drone, or a spot spray system. Typically, the herbicidal composition is made up with water, buffer, and/or further auxiliaries to the desired application concentration and the ready-to-use spray liquor or the herbicidal combination/composition is thus obtained.

In another embodiment, the herbicidal combination/composition may be used for foliar application, application to a ground, or to the soil, or to a plant, or a locus or a plant propagation material, or combinations thereof.

In another embodiment, the herbicidal combination/composition can be used in agricultural lands such as fields, paddy fields, lawns and orchards or in non-agricultural lands, fallow fields, or for the purpose of chemical fallow application.

According to an embodiment, the present disclosure provides a process for preparing a herbicidal composition comprising dimethenamid or dimethenamid-P, at least a diphenyl ether herbicides and at least one agriculturally acceptable excipient, wherein the process comprises mixing dimethenamid or dimethenamid-P, at least a phenyl ether herbicide and at least one agriculturally acceptable excipient homogenously to form the herbicidal composition.

In another embodiment, the process comprises optionally adding an additional agrochemical/herbicide.

According to an embodiment, the various components of the herbicidal combination/composition may be used individually or partially or completely mixed with one or more to prepare the herbicidal combination/composition. It is also possible for the components to be separately packaged and used as a component in a kit of parts.

In one embodiment, the kits may include one or more of the components that are used to prepare the herbicidal combination/composition comprising dimethenamid or dimethenamid-P and at least a diphenyl ether herbicides. For examples, the kits may include active ingredients and/or at least one agriculturally acceptable excipient. One or more of the components may already be combined together or pre-formulated.

According to an embodiment of the present disclosure, a kit comprising the herbicidal combination/composition comprising dimethenamid or dimethenamid-P and aclonifen is provided. The kit comprises a plurality of components, including at least one of the ingredients of the herbicidal combination/composition.

In one embodiment of the present disclosure, the kit includes at least one, or all of the components needed to prepare the herbicidal combination/composition. For example, the kit may include dimethenamid or dimethenamid-P and at least one agriculturally acceptable excipient. The kit may optionally include an additional agrochemical or an additional herbicide.

One or more of the components may already be combined together or pre-formulated. In those embodiments where more than two components are provided in a kit, the components may already be combined and as such are packaged in a single container such as a vial, bottle, can, pouch, bag and/or canister.

In other embodiments, two or more components of a kit may be packaged separate from one another, i.e., they are not pre-formulated. As such, a kit may include one or more separate containers such as vials, cans, bottles, pouches, bags and/or canisters, each container containing a separate component of the herbicidal combination/composition comprising dimethenamid or dimethenamid-P.

In both forms, an individual component of the kit may be applied separate from or together with the other components of the kit or as a component of the herbicidal combination/composition.

The disclosure also provides a kit comprising the herbicidal combination/composition for controlling weed growth or for improving yield of desired crop and instructions for use. The instructions for use typically comprise instructions for the application of the herbicidal combination/composition to a plant, or a locus, or a plant propagation material thereof.

According to an embodiment, the kit of parts comprises:
a. dimethenamid or dimethenamid-P;
b. at least a diphenyl ether herbicides;
c. at least one adjuvant; and
d. optionally further comprises instructions for use.

According to an embodiment, the kit of parts comprises:
a. dimethenamid or dimethenamid-P;
b. at least a diphenyl ether herbicides;
c. at least one agriculturally acceptable excipient; and
d. optionally further comprises instructions for use.

According to an embodiment, the kit of parts comprises:
a. dimethenamid or dimethenamid-P;
b. aclonifen;
c. at least one agriculturally acceptable excipient; and
d. optionally further comprises instructions for use.

According to an embodiment of the present disclosure, the herbicidal combination/composition of the present disclosure is stable, over time and at various temperatures.

In an embodiment of the present disclosure, the herbicidal combination/composition preferably retains its physical integrity during handling and spreading, and, upon broadcasting, typically releases the active ingredients when contacting fallow field, wet soil, irrigation water, or rainfall hits the broadcasting granules.

In an embodiment, the herbicidal combination/composition may provide synergistic control for weeds at pre-emergent and/or at post-emergent stage.

In another embodiment, the herbicidal combination/composition is synergistic and effective in improving yield of desired crop by controlling weeds. The herbicidal combination/composition also provides increase in crop yield and crop quality.

In view of the above, it will be seen that the several advantages of the disclosure are achieved, and other advantageous results attained. Although the present disclosure has been disclosed in full, it will be understood that numerous additional modifications and variations could be made thereto without departing from the scope of the disclosure.

The present disclosure is more particularly described in the following examples that are intended as illustration only, since numerous modifications and variations within the scope of the present disclosure will be apparent to those skilled in the art. The following examples illustrate the basic methodology and versatility of the present disclosure. It will be understood that the specification and examples are illustrative but not limitative of the present disclosure and that other embodiments within the spirit and scope of the disclosure will suggest themselves to those skilled in the art. Other embodiments can be practiced that are also within the scope of the present disclosure. The following examples illustrate the disclosure, but by no means intend to limit the scope of the claims.

### EXAMPLES:

The present invention exhibits enhanced herbicidal activity by combining dimethenamid-p and aclonifen.
Colby's equation was used to determine the herbicidal effects expected from the mixtures.
The following equation was used to calculate the expected activity of mixtures containing two active ingredients, A and B: $Expected = A + B - \left(A\times B/100\right)$
A = observed efficacy of active component A at the same concentration as used in the mixture;
B = observed efficacy of active component B at the same concentration as used in the mixture. The ability of the compositions described herein to afford suitable rodent control is illustrated by the efficacy data in Table 1.
Below table exhibits enhanced herbicidal action of the combination of dimethenamid-p and aclonifen over solo dimethenamid-p and aclonifen.
Example 1: Efficacy of dimethenamid or dimethenamid-P + aclonifen for control of Annual grasses.

**Table 1**

| **Treatment details** | | *Sinapis alba* (SINAL) | |
|---|---|---|---|
| **Trt.** | **Description** | | |
| 1 | | Observed % Control (19 DAA*) | Expected % Control |
| 2 | Aclonifen 450 g ai/ha | 53 | - |
| 3 | Aclonifen 432 g ai/ha | 63 | - |
| 4 | Dimethenamid-p 576 g ai/ha | 40 | - |
| 5 | Aclonifen 450 g ai/ha + Dimethenamid-p 576 g ai/ha | 93 | 71.8 |
| 6 | Aclonifen 432 g ai/ha + Dimethenamid-p 576 g ai/ha | 88 | 77.8 |

| | | | |
|---|---|---|---|
| *Days after application | | | |

The effect of application of dimethenamid-P alone, and dimethenamid-P along with aclonifen was observed on the growth of various annual grass weeds. The observed and expected percentage (%) control of weeds was evaluated to assess the efficacy of the combination and the same has been disclosed in Table 1. The data as disclosed in Table 1 illustrates enhanced efficacy of dimethenamid-P + aclonifen as compared to dimethenamid-P and aclonifen alone.

In view of the above, it will be seen that the several advantages of the disclosure are achieved, and other advantageous results attained. Although the present disclosure has been disclosed in full, it will be understood that numerous additional modifications and variations could be made thereto without departing from the scope of the disclosure.

## Claims

1. A herbicidal combination comprising:
a. dimethenamid or dimethenamid-P; and
b. at least one diphenyl ether herbicide selected from acifluorfen, aclonifen, bifenox, chlomethoxyfen, chlornitrofen, ethoxyfen, etnipromid, fluorodifen, fluoroglycofen, fluoronitrofen, fomesafen, fucaomi, furyloxyfen, halosafen, lactofen, nitrofen, nitrofluorfen, or oxyfluorfen.

2. The herbicidal combination as claimed in claim 1, wherein the weight ratio of the dimethenamid or dimethenamid-p to the diphenyl ether herbicide is from 1:100 to 100:1, preferably 1:80 to 80:1, more preferably 1:10 to 10:1, and most preferably 1:1 to 4:1.

3. The herbicidal combination as claimed in claim 1, wherein dimethenamid or dimethenamid-P is applied at about 100 to about 1000 g a.i./ha.

4. The herbicidal combination as claimed in claim 1, wherein the diphenyl ether herbicide is aclonifen.

5. The herbicidal combination as claimed in claim 4, wherein aclonifen is applied in an amount from about 300 to about 600 g ai/ha.

6. A herbicidal composition comprising:
a. dimethenamid or dimethenamid-P;
b. at least one diphenyl ether herbicide selected from acifluorfen, aclonifen, bifenox, chlomethoxyfen, chlornitrofen, ethoxyfen, etnipromid, fluorodifen, fluoroglycofen, fluoronitrofen, fomesafen, fucaomi, furyloxyfen, halosafen, lactofen, nitrofen, nitrofluorfen, or oxyfluorfen; and
c. at least one agriculturally acceptable excipient.

7. The herbicidal composition as claimed in claim 6, wherein dimethenamid or dimethenamid P is present at about 1-95% w/w, preferably 30-90 % w/w, more preferably 50-85 % w/w of the total composition and diphenyl ether herbicide is present at about 1-95 % w/w, preferably 10-80 % w/w, more preferably 30-60 % w/w of the total composition.

8. The herbicidal composition as claimed in claim 6, wherein the excipient is selected from solvents, diluents, carriers, surfactants, dispersing agents, wetting agents, antifoam agents, stabilizers, antifreeze agents, biocides, viscosity modifiers, pH modifiers, and combinations thereof.

9. The herbicidal combination as claimed in claim 1 or the composition as claimed in claim 6, further comprises a herbicide safener selected from mefenpyr, mefenpyr diethyl, isoxadifen ethyl, cyprosulfamide, fenclorim, cloquintocet mexyl, benoxacor, or fluxofenim.

10. The herbicidal combination or composition as claimed in claim 9, wherein safeners are applied at rate of 10 g/ha to about 2500 g/ha.

11. A method of controlling weeds comprising applying to a plant, a plant propagation material, or a locus thereof, or a fallow field, an effective amount of the herbicidal combination or the herbicidal composition comprising:
a. dimethenamid or dimethenamid-p; and
b. at least one diphenyl ether herbicide selected from acifluorfen, aclonifen, bifenox, chlomethoxyfen, chlornitrofen, ethoxyfen, etnipromid, fluorodifen, fluoroglycofen, fluoronitrofen, fomesafen, fucaomi, furyloxyfen, halosafen, lactofen, nitrofen, nitrofluorfen, or oxyfluorfen.

12. The method according to claim 11, wherein the application comprises applying the composition by foliar spraying, soil or ground application, via an irrigation system, knapsack sprayer, spray tank, aircraft, drone, or spot-spray system, using water as a carrier, for pre-emergence and/or post-emergence control of weeds.

13. The method as claimed in claim 11, wherein the crops include rice, wheat, barley, rye, oat, sorghum, cotton, soybean, peanut, beet, rapeseed, sunflower, maize/corn, canola, potato, sugarcane, vegetables, fruits, nuts, turf, and ornamentals.

14. A kit comprising:
a. dimethenamid or dimethenamid P;
b. at least one diphenyl ether herbicide selected from acifluorfen, aclonifen, bifenox, chlomethoxyfen, chlornitrofen, ethoxyfen, etnipromid, fluorodifen, fluoroglycofen, fluoronitrofen, fomesafen, fucaomi, furyloxyfen, halosafen, lactofen, nitrofen, nitrofluorfen, or oxyfluorfen; and
c. optionally at least one agriculturally acceptable excipient;
together with instructions for use describing application to a plant, plant propagation material, or locus thereof.

15. Use of the herbicidal combination of any of claims 1-5 or the herbicidal composition of any of claims 6-10 for controlling weeds, including herbicide resistant and/or herbicide tolerant weeds, and/or for improving crop yield.
